# EUROPÄISCHE PATENTSCHRIFT

(11) **EP 2 517 876 B1**
(45) Veröffentlichungstag und Bekanntmachung des Hinweises auf die Patenterteilung: **29.07.2015**
(21) Anmeldenummer: 11164102.3
(22) Anmeldetag: 28.04.2011
(51) Int. Cl.: B32B 15/08, B32B 27/36, B65D 81/34, B65D 77/20

(54) **Verpackung für Fertiggerichte**
Packaging for ready meals
Emballage pour plats préparés

(43) Veröffentlichungstag der Anmeldung: 31.10.2012
(73) Patentinhaber: NICHOLL Food Packaging Ltd., Cannock Staffordshire WS11 OXA (GB)
(72) Erfinder: Weltert, Jörg P., 8304 Wallisellen (CH)
(74) Vertreter: Troesch Scheidegger Werner AG

(56) Entgegenhaltungen:
- WO-A1-2005/095224
- DE-A1- 1 586 288

## Beschreibung

Die vorliegende Erfindung betrifft eine Verpackung für Fertiggerichte gemäss dem Oberbegriff nach Anspruch 1 sowie ein Verfahren zu deren Herstellung.

Fertiggerichte sind in der Regel abgepackte Mahlzeiten, welche individuell verpackt sind und alle Elemente beispielsweise für eine einzige Mahlzeit enthalten und einfach in der Zubereitung sind. Normalerweise müssen derartig abgepackte Fertigmahlzeiten beim Konsumenten lediglich erwärmt werden. Bekannt sind schalenartige oder mehrschichtige Beutel aus Aluminium, Kunststoff oder polymerbeschichtetem Karton. Das Verpackungsmaterial der abgepackten Mahlzeiten richtet sich nach deren Herstellungsprozessen, den Produkteschutzanforderungen, den Distributionswegen, der Haltbarkeit sowie der Zubereitungsart im Haushalt.

Sogenannte TakeAway Fertigmahlzeiten weisen in der Regel eine extrem kurze Haltbarkeit auf wie beispielsweise von einem Tag. Verschiedene Verpackungs- und Verarbeitungstechnologien zusätzlich zu den Distributionsmethoden sind bekannt, um die Haltbarkeit zu erhöhen. Beispielsweise vorab pasteurisierte Mahlzeiten verpackt unter modifizierter Atmosphäre wie beispielsweise Stickstoff und Distribution via Kühlkette (4°C) führen zu Haltbarkeit von 6 bis 10 Tagen. Derartige Verpackungen wie sogenannte MAP (Modified Atmosphere Packaging) verwenden in der Regel lediglich C-PET- und Aluminiumschalen, die in normalen Haushaltbacköfen bei 190°C für C-PET und 220°C für Aluminiumschalen während 15-20 Min. erhitzt werden. Fertiggerichte werden auch mittels Mikrowellen erwärmt. Eine microbiologisch ausreichende Sicherheit wird bei MAP verpackten Fertiggerichten jedoch nicht erreicht. Das MAP Verfahren mit erhöhtem CO₂ Gehalt verhindert oder reduziert das Wachstum verschiedener aerober Bakterien. Es fördert jedoch die Wachstum grampositiver, pathogener Bakterien. Sogenannte "In-pack" Pasteurisierung und gekühlte Distribution führt zu einer Haltbarkeitserhöhung von Fertigmahlzeiten je nach verpacktem Gut bis zu 36 Tagen. So beträgt beispielsweise die Haltbarkeit bei Fischprodukten ca. 24 Tage, währenddem Fleischprodukte 30 Tagen und Gemüse, wie Kartoffeln, bis 36 Tagen Haltbarkeit ergeben. Die thermische "In-pack" Behandlung zeichnet sich durch die damit erreichte mikrobiologische Sicherheit der Lebensmittel gegenüber allen anderen Verfahren aus. Derartige Mahlzeiten sind typischerweise in thermogeformten Polymerschalen und dichten Transparentfolien abgepackt, pasteurisiert in Gegendruckatmosphäre. Das Wiedererwärmen der Mahlzeiten erfolgt in einem heissen Wasserbad oder mittels Mikrowelle. Thermoformbare Kunststoffe wie z.B. Polypropylen eignen sich nicht für eine direkte Hitzeexposition im Haushaltbackofen. Mit C-PET hergestellte Schalen werden üblicherweise im Haushaltbackofen bei 190°C erwärmt. C-PET verliert jedoch die Schalenstabilität bei Erwärmung über 200°C und weist bei der Versiegelung mit dem Deckelfolienmaterial bereits Schrumpfeigenschaften auf, was zu undichten Packungen führt. Als Folge davon eignen sich C-PET-Schalen nicht für Sterilisationsprozesse. Gefrierprozesse wiederum ergeben eine Haltbarkeit von 4 bis 6 Monaten. Allerdings ist der Gefrierprozess energieintensiv und oft wird der Geschmack des Lebensmittels oder der Mahlzeit beeinflusst, was mittels zusätzlichem Salzen oder Fettbeigabe kompensiert wird. Oft werden Tiefkühlprodukten auch Konservierungsmittel beigefügt wie butyliertes Hydroxyamid. Für das Wiedererwärmen gefrorener Mahlzeiten in einem Haushaltbackofen, erfolgt die Verpackung in Aluminiumschalen.

Eine weitere Methode für das Abpacken von Lebensmitteln für eine Haltbarkeit von mehr als 6 Monaten, wird sogenannte "In-pack Sterilisierung" verwendet. Dadurch wird ermöglicht, dass die Distribution derartiger Produkte bei Raumtemperatur erfolgen kann. Der Sterilisationsprozess setzt absolute Dichtheit der Verpackungsdichtung voraus um Rekontamination zu verhindern. Da Polymere wie Polypropylen oder Mischungen mit PVC (Polyvinylchlorid)als Dichtmaterialien in Aluminiumverpackungsschalen und mehrschichtigen Beutellaminaten verwendet werden, um die erforderliche Dichtheit zu erhalten und um thermische Sterilisation bei >120°C während einer Stunde in einem Autoklaven zu ermöglichen, wird jedoch eine Hitzeexposition der verwendeten Produkte beim Wiedererhitzungsprozess in einem konventionellen Haushaltbackofen zum Beispiel bei 240°C während 15-20 Min. verunmöglicht. Aus diesem Grunde sind derartige Verpackungen nicht geeignet für das Wiedererhitzen oder Gratinieren von Fertigmahlzeiten in Haushaltbacköfen.

In der EP 2 145 759 schliesslich wird ein Laminat für die Herstellung eines Lebensmittelcontainers mittels Tiefziehen vorgeschlagen, basierend auf einer Aluminiumfolie und einer biaxial orientierter Polyesterfolie. Der Verbund erfolgt mittels einem Laminatklebstoff. In der Praxis ergaben sich allerdings Ablösungen der Laminatschichten beim Erhitzen auf erhöhten Temperaturen.

In der WO 2005/095 224 schliesslich, wird eine Verpackung für Lebensmittel aus zwei Schalenhälften beschrieben, wobei die untere Schalenhälfte aus Aluminium und die obere Schalenhälfte aus rigidem Kunststoff hergestellt ist.

Keine der aktuell im Markt befindlichen flexiblen oder halbstarren Verpackungen erfüllt die für die Erfindung gesteckten Anforderungen.

Es ist daher eine Aufgabe der vorliegenden Erfindung, als Folge der obigen Ausführungen, eine Verpackung für Fertigprodukte vorzuschlagen, bei welcher das Füllgut nach der Pasteurisation gekühlt über eine Zeitdauer von mehreren Wochen frisch und nach der Sterilisation über Monate bei normaler Raumtemperatur haltbar ist und die Zubereitung in einem herkömmlichen Backofen oder gegebenenfalls in einem Mikrowellenofen erfolgen kann.

Eine weitere Aufgabe der vorliegenden Erfindung besteht darin, derartige Verpackungen vorzuschlagen, welche vollständig PVC-frei sind.

Wiederum eine weitere Aufgabe besteht darin, eine Verpackung vorzuschlagen, welche eine Erhitzung (Gratinierung) auf 220°C - 240°C zulässt und ihre Formstabilität beibehält.

Erfindungsgemäss wird eine Verpackung, insbesondere geeignet für Fertigmahlzeiten, gemäss dem Wortlaut nach Anspruch 1 vorgeschlagen.

Zur Erhaltung der Produktequalität über einen längeren Zeitraum bei gekühlter und ungekühlter Distribution besteht eine weitere Anforderung darin, dass das verwendete Verpackungsmaterial eine sehr hohe Gas- und Wasserdampfdichtigkeit aufweist. Die absolute Gasdichtigkeit des verwendeten Aluminiums für die Schale der Verpackung erlaubt die Vakuumierung der Verpackung und den Austausch des Sauerstoffes mit Inertgasen wie zum Beispiel N₂, CO₂, O₂ und Gasgemischen während dem Verpackungsprozess. Die Gaszusammensetzung im Inneren der Verpackung hat einen grossen Einfluss auf das verpackte Lebensmittel das in unterschiedlichem Masse physikalischen, mikrobiologischen und auch biochemischen Veränderungen unterliegt. Die während der Lagerung von Lebensmitteln eintretenden Veränderungen beruhen meistens auf dem Verderb durch Oxydation. Stickstoff zum Beispiel eignet sich aufgrund seiner Reinheit hervorragend für oxydationsempfindliche sowie Wasser anziehende Bestandteile wie z.B. einige Vitamine, Eiweiss- oder Farbstoffe, Fette und Öle wie sie gerade in Fertigmahlzeiten enthalten sind. Zum Erhalt der Schutzgasatmosphäre bis zum Verzehr muss ein Hochbarrieren- Verpackungsmaterial wie zum Beispiel Aluminium eingesetzt werden.

Vorgeschlagen wird, dass ein schalenartiges Behältnis verwendet wird bestehend weitgehendst aus Aluminium wie beispielsweise einer Aluminiumlegierung. Vorgeschlagen wird beispielsweise die Verwendung einer Aluminiumlegierung enthaltend Silizium und Eisen. Selbstverständlich handelt es sich hierbei um ein Beispiel und sämtliche im Lebensmittel-Verpackungsbereich verwendeten Aluminiummaterialien sowie Aluminiumlegierungen sind geeignet für die Herstellung der erfindungsgemäss vorgeschlagenen Lebensmittelschale.

Erfindungsgemäss vorgeschlagen wird, dass die Aluminiumschale innenseitig eine wärmebeständige, lebensmitteltaugliche Polyesterlackierung aufweist, eine Lackierung aus PET (Polyethylenterephthalat).

In der Praxis hat es sich gezeigt, dass bei einer Verpackung, bei welcher das Aluminium bzw. die Aluminiumlegierung lackiert wurde, eine ausgezeichnete Haltbarkeit und Erhitzung im Haushaltbackofen bei bis zu 240°C erzielt werden konnte. Dies im Gegensatz zu den im Stand der Technik vorgeschlagenen Laminaten aus Polyesterfilm und Aluminium. Durch die Verwendung von lackiertem Aluminium für das Herstellen einer Lebensmittelverpackung konnte so zum ersten Mal eine wirklich PVC-freie Verpackung vorgeschlagen werden, welche den oben gestellten Anforderungen gerecht wird.

Für das Auftragen der Polymerlackierung wird vorzugsweise die Aluminiumschale zunächst entfettet und chromatisiert beispielsweise mittels bekanntem chromsäurehaltigen-2-Komponenten-Verfahren. Derartige Chromatisierungsverfahren sind allgemein bekannt für das Entfetten und anschliessende Beschichten bzw. Lackieren von Aluminiummaterialien.

Vor der eigentlichen Lackierung ist es zusätzlich möglich gegebenenfalls empfehlenswert auf das entfettende und chromatisierte Aluminium einen Primer und einen sogenannten Haftvermittler aufzutragen für eine verbesserte Haftung der schliesslich aufgebrachten Lackschicht. Die Zusammensetzung zum Lackieren besteht aus einem teilweise vernetzten Polyäthylentherephtalat Zusätzlich kann die Lackierzusammensetzung Lösungsmittel, Füllstoffe, Pigmente wie beispielsweise Titandioxid, UV-absorbierende bzw. inhibitierende Additive enthalten, aktive Antischaum-Additive, Verdicker, etc. Derartige Zusammensetzungen zum Lackieren von Aluminium sind aus dem Stand der Technik bestens bekannt. Das Lackieren selbst kann beispielsweise mittels Aufsprühen, Aufpinseln, mittels Rakel, etc. erfolgen.

Wichtig ist ja, dass die Lackierung auch unter Pasteurisations- und Sterilisationsbedingungen einwandfrei auf dem Aluminium haftet und andererseits keine Bestandteile an das in der Schale gelagerte Lebensmittel abgibt. Bei der Verwendung von Laminaten, wie aus dem Stand der Technik bekannt, hat es sich gezeigt, dass einerseits bei Pasteurisations- und Sterilisationsbedingungen und auch später, beispielsweise beim Erhitzen in einem Backofen auf 240°C, Delamination auftreten kann, was bei den erfindungsgemäss vorgeschlagenen lackierten Systemen nicht beobachtet werden kann.

Für das Verschliessen des schalenartigen Behältnisses wird eine Abdeckfolie vorgeschlagen, bestehend aus einer Kunststoffverbundfolie. Aber auch hier gilt, dass irgendwelche in der Lebensmittelindustrie verwendete Polymere für das Herstellen der Abdeckfolie geeignet sind. Dabei eignet sich eine erste Kunststoffverbundfolie, welche z.B. mindestens PET (Polyester), OPA (orientiertes biaxiales Polyamid), PP (Polypropylen) und peelbares PET (peelbares Polyester) aufweisen. Zwischen den PET-, OPA-, PP- und peelbarer PET-Schichten ist Kleber angeordnet. In einer weiteren Ausführungsform der Abdeckfolie kann eine weitere Kunststoffverbundfolie verwendet werden, welche mindestens PET-AlOx (Polyester mit Aluminiumoxid-Beschichtung), OPA, PP und peelbares PET aufweist. Die erste Kunststoffverbundsfolie ist im Vergleich zur weiteren Kunststoffverbundsfolie für den Einsatz zum Verschliessen von Schalen von Verpackungen mit kürzer haltbaren Füllgütern geeignet. Die weitere Kunststoffverbundsfolie weist im Vergleich zur ersten Kunststoffverbundsfolie eine deutlich höhere Gasbarriere auf und eignet sich daher für den Einsatz beim MAP-Verfahren (Verpackung unter modifizierter Atmosphäre bzw. "Modified Atmosphere Packaging") vor der Pasteurisation bzw. Sterilisation der erfindungsgemässen Verpackung und/oder für den Einsatz zum Verschliessen von Schalen mit länger haltbaren Füllgütern. Je nach Aufbau der Kunststoffverbundfolie kann zur Erzielung einer optimalen Haltbarkeit des Füllgutes die dafür notwendige Gas- und Wasserdampfbarriere massgeschneidert bereitgestellt werden. Ein weiterer Vorteil dabei ist, dass diese Kunststoffverbundfolien PVC-frei sind. Weiter sind die oben beschriebenden Kunststoffverbundfolien peelbar, dadurch kann das Füllgut nach Entfernen der Abdeckfolie im Backofen in der Schale gratiniert werden.

Auf der, der Schalen-Innenseite zugewandten Oberfläche der Abdeckfolie ist wiederum eine lebensmitteltaugliche und gut wärmebeständige Polymerschicht vorgesehen, welche zusätzlich eine gute Verschweissbarkeit mit der Polymer-Innenbeschichtung der Aluschale entlang deren Rand aufzuweisen hat. Mögliche Materialien sind sowohl Polypropylen wie allenfalls wiederum das für die Innenbeschichtung verwendete Polyester, wie bspw. teilvernetztes PET. Erfindungswesentlich ist nun, dass diese Oberfläche der Abdeckfolien-Innenseite PVC-frei ist, da PVC bei Lebensmittelverpackungen, welche beispielsweise in einem herkömmlichen Haushaltsbackofen erhitzt werden, in vielen Ländern nicht mehr zugelassen ist und in der Abfallwirtschaft insbesondere bei der zu erheblichen Problemen aufgrund der Freisetzung von Chlorid verursacht. Generell ist Zurückhaltung bei der Verwendung von PVC in Verpackung festzustellen, was dazu führte, dass eine Vielzahl namhafter Markteilnehmer PVC ausschliesslich nur noch dort einsetzen, wo technisch/technologisch keine Alternative angeboten wird.

Wichtig ist, dass das für die Beschichtung derjenigen Oberfläche der Abdeckfolie, welche der Innenseite der Aluschale zugewandt ist und das für die Innenlackierung der Aluschale verwendete PET miteinander gut verschweissbar sind, um den üblicherweise bei Sterilisation verwendeten Temperaturen im Bereich von ca. 120°C und den erhöhten Drücken und der hohen Prozessfeuchtigkeit stand halten. Auch wenn die Sterilisation normalerweise in einem Autoklaven bei dynamischem Verlauf des Erhitzungs- und Gegendruckprozesses, das heisst bei erhöhtem Aussendruck erfolgt, entsteht trotzdem im Innern der Lebensmittelverpackung ein erhöhter Druck. Dies insbesondere in Folge erhöhtem Dampfdruck im Innern der Lebensmittelverpackung.

Die Anforderungen an die erfindungsgemäss vorgeschlagene Verpackung insbesondere für Lebensmittel und Fertiggerichte, umfassen:
- Sterilisierbarkeit und Pasteurisierbarkeit sämtlicher Materialen und Sicherstellung der Dichtheit der Verpackung,
- Wasserdampfresistenz während dem Pasteurisations- resp. Sterilisationsprozess, sowie auf den Aussenseiten des Behältnisses,
- Druckbeständigkeit des Behältnisses bei 0,5 bis 2,2 bar,
- keine Geruchsbildung auch unter Pasteurisierungs-, Sterilisations- und Zubereitungsbedingungen in einem Backofen,
- absolut PVC frei,
- kein Epoxy bzw. Bisphenol A enthaltend,
- zubereitbar in einem Backofen von bis zu 240°C während mindestens 30 Min.,
- Formstabil in der Erhitzung,
- keine Delamination irgendwelcher Beschichtungen,
- sämtliche Materialen entsprechen Lebensmitteltauglichkeit (FDA),
- Gute vollständige Öffnungscharakteristik (Peeling) der Abdeckfolie von der Schale.
Bei Einhaltung der oben erwähnten Bedingungen, erfüllt die erfindungsgemäss vorgeschlagene Verpackung als erste Verpackung dieser Art im Markt die eingangs gestellten Anforderungen wie beispielsweise
- Distribution bei Raumtemperatur,
- lange Haltbarkeit der Produkte wie beispielsweise mehr als 6 Monate,
- zuverlässige Dichtung der Verpackung während der Sterilisation bei mindestens 120°C während mindestens 1 Stunde.

Die Erfindung wird nun beispielsweise und unter Bezug auf die beigefügten Figuren zusätzlich erläutert.

In Figur 1 ist in Perspektive eine erfindungsgemässe Verpackung in halbgeöffneten Zustand dargestellt und

in Figur 2 ist schematisch der Aufbau einer Schale der erfindungsgemässen Verpackung dargestellt. Weiter sind in den Figuren 3a und 3b schematisch verschiedene Abdeckfolien dargestellt.

Die erfindungsgemässe Verpackung 1 weist eine Schale 3 auf, im Wesentlichen bestehend aus Aluminium bzw. einer Aluminiumlegierung wie beispielsweise einer EN AW 8011A Alulegierung mit Eisen und Silizium. Auf der Innenseite der Aluminiumschale 3 ist eine hitzebeständige, lebensmitteltaugliche Polymerlackierung vorgesehen, die aus einem gut wärmebeständigen teilvernetzten PET besteht. Für das Auftragen dieser Polymerschicht wird das Aluminium bzw. die Aluminiumlegierung zunächst chromatisiert und anschliessend mit einem Haftvermittler wie beispielsweise einem Primer versehen. Die Herstellung der Schale selbst erfolgt nach herkömmlichen, bekannten Verfahren beispielsweise mittels Tiefziehen, wobei die Schale oben seitlich vorstehend einen Rand 7 aufweist.

Für das Verschliessen der Schale ist eine Abdeckfolie 11 vorgesehen, welche aus einer Kunststoffverbundfolie bestehen kann. Aussenseitig kann die Abdeckfolie 11 mindestens teilweise mit einem Aufdruck bzw. einer Klebeetikette versehen sein, für die Charakterisierung des in der Schale verpackten Gutes wie einer Fertigmahlzeit.

Die Innenseite der Folie 11 ist mit einer PET-Schicht 15 versehen, welche wiederum lebensmitteltauglich und wärmebeständig ist. Wesentlich ist, dass diese PET-Schicht 15 entlang der Randpartie 17, deckungsgleich mit dem vorstehenden Rand 7 der Schale 3 und der darauf vorgesehenen Innen-PET-Lackierung gut verschweissbar ist. Die Verschweissbarkeit hat derart zu sein, dass absolute Dichtheit auch bei oder nach einer Sterilisation der Verpackung mit der darin angeordneten Fertigmahlzeit garantiert ist. Als Material kommt teilvernetztes PET in Frage. Für das Auftragen dieser Beschichtung 15 auf die Innenseite der Folie 11 wird diese gegebenenfalls mit einem Haftvermittler wie einem sogenannten Primer versehen.

Wichtig dabei ist natürlich, dass das Design des Deckels mit demjenigen der Schale genau übereinstimmt, um ein genaues Verschweissen entlang der Randpartien 7 und 17 zu ermöglichen.

Selbstverständlich ist es möglich die Abdeckfolie 11 derart auszugestalten, dass beispielsweise mit einer seitlich vorstehenden Randpartie bzw. einem "Lappen" ein leichtes Abziehen des Deckels von der Schale ermöglicht wird. Das leichte Entfernen resp. ein leichtes "peel off" des Deckels ist zudem auch wichtig bei der Ausgestaltung der Schweissnaht entlang der beiden Randpartien 7 und 17.

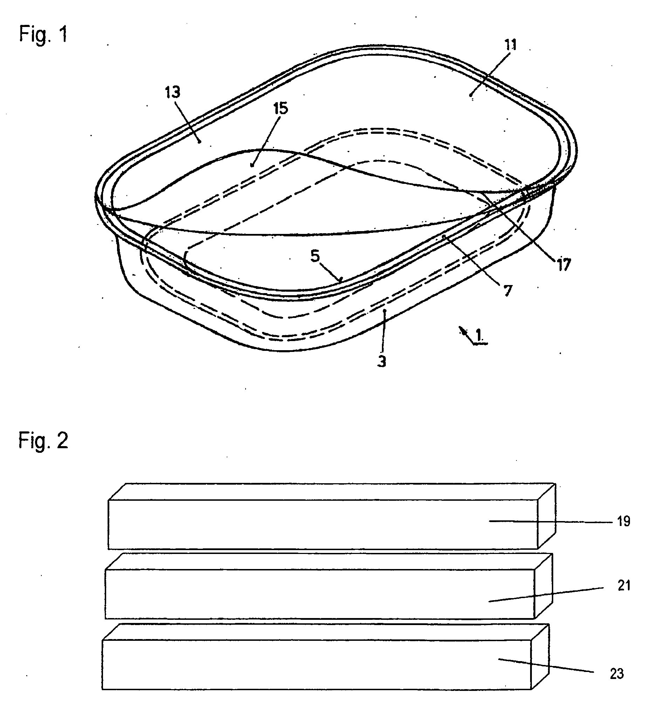

Figur 2 zeigt schematisch den Aufbau von Schalenmaterial der erfindungsgemässen Verpackung 1. Dabei weist das Schalenmaterial von aussen gegen innen mindestens folgende Schichten auf: Eine Aussenschicht 19 in Form eines Sterilisationsbeständigen Aussenlacks, eine an die Aussenschicht 19 folgende weitere Schicht 21 in Form eines Aluminum-Schalenmaterials und die an die weitere Schicht 21 folgende Innenschicht 23 in Form einer hitzebeständigen PET-Lackierung.

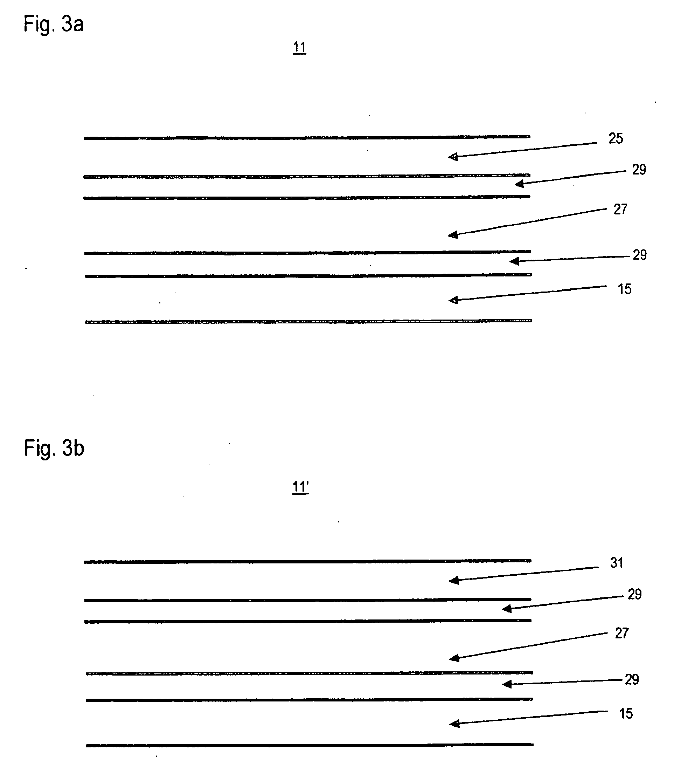

Figur 3a zeigt schematisch den Aufbau der Abdeckfolie 11 zur Abdeckung der Schale 3 der erfindungsgemässen Verpackung 1. Dabei weist die Abdeckfolie 11, ausgehend von einer zu einer Aussenseite der Verpackung hin ausgerichtete Seite hin, mindestens folgende Schichten auf: eine äussere Schicht in Form einer PET-Schicht 25, eine an die PET-Schicht 25 folgende OPA-Schicht 27 und die an die OPA-Schicht 27 folgende peelbare PET-Schicht 15. Die OPA-Schicht besteht aus einem biaxial gereckten Polyamid bzw. aus einem orientierten biaxialen Polyamid. Zwischen den verschiedenen Schichten 25 und 27 bzw. 27 und 15 ist eine Klebschicht 29 aus Kleber angeordnet. Dabei ist der Kleber pasteurisations- und sterilisationsbeständig. Die Abdeckfolie 11 ist dabei transparent ausgebildet, dadurch wird eine freie Sicht auf das in der Schale 3 vorhandene Füllgut ermöglicht, z.B. beim Kauf des Produktes. Nach Entfernen der Abdeckfolie 11 kann das in der Schale 3 enthaltene Füllgut (z.B. Fertigmahlzeit) problemlos im Backofen gratiniert werden.

Fig. 3b zeigt schematisch den Aufbau einer weiteren Abdeckfolie 11' der erfindungsgemässen Verpackung 1. Der Unterschied zur der in Figur 3a dargestellten Abdeckfolie 11 ist, dass in Figur 3b die äussere Schicht in Form einer PET-ALOx-Schicht 31 ausgebildet ist. Unter dem Begriff PET-AlOx ist ein Polyester mit Aluminiumoxid-Beschichtung zu verstehen. Wie bereits zu Fig. 3a beschrieben, ist die weitere Abdeckfolie 11' ebenfalls transparent ausgebildet.

Bei der Darstellung, gemäss den beigefügten Figuren, handelt es sich nur um Beispiele zur besseren Erläuterung der vorliegenden Erfindung. Selbstverständlich kann die Schale andersartig gewählt werden und auch die Wahl des Deckels kann unterschiedlich sein. Auch kann das Behältnis beutelartig ausgebildet sein, wichtig dabei ist, dass bei der Herstellung bzw. nach dem Abpacken eines Lebensmittels wie einer Fertigmahlzeit eine gute Verschweissbarkeit ermöglicht wird.

Die hochdichte Verschweissung von hochhitzeresistenten Polymeren wie PET ist auf den handelsüblichen Verpackungsanlagen erschwert oder nur mittels aufwendiger Aufrüstung möglich. Voraussetzung für die Verschweissung hochhitzeresistenter Polymere ist einerseits die Abstimmung der Vernetzung der jeweiligen Polymerschichten untereinander und andererseits mit der einzusetzenden Verschweissungstechnologie. Um die notwendige Kohäsionsschweissung der Deckel- mit der Schalenbeschichtung zu erreichen, werden erfindungsgemäss dauerbeheizte, mit dem Siegelrand kompatible, flächige Werkzeuge eingesetzt die in absoluter Planlage eine an die Struktur des Verpackungssubstrats angepasste, definiert unterschiedlich spezifizierte Wärmezufuhr auf die Deckelober- und Schalenunterseite unter konstanten, hohen Druckbedingungen während einem sehr kurzen Zeitfenster erlauben.

Die erfindungsgemässe Verpackung bleibt während und nach dem Erhitzungsprozess formstabil. Auch die Lackierung der Schale bleibt während dem Erhitzungsprozess neutral. Die erfindungsgemässe Verpackung stellt sicher, dass beim Schalensiegelrand während dem Wärmeversiegelungsprozess keine Schrumpf-Neigung auftritt und die Verpackung dadurch zuverlässig abdichtet.

## Patentansprüche

1. Lebensmittelverpackung insbesondere für Fertiggerichte aufweisend eine Schale (3), bestehend weitgehendst aus Aluminium oder einer Aluminiumlegierung, wobei die Schale an ihrer Innenseite mit einem wärmeresistenten, lebensmitteltauglichen Polymer (5) lackiert ist, wobei die Schale (3) verschliessbar ist mit einer aus einer Kunststoffverbundfolie bestehenden Abdeckfolie (11; 11'), welche innenseitig mit einem lebensmitteltauglichen, wärmebeständigen Siegellack (15) lackiert ist, welcher mit der Polymerbeschichtung der Schale (3) wenigstens entlang des Schalenrandes (7, 17) verschweissbar ist **dadurch gekennzeichnet, dass** die Polymerlackierung der Schale (3) auf Basis eines wenigstens teilweise venetzten Polyäthelentherephthalats (PET) aufgebaut ist.

2. Verpackung nach Anspruch 1, **dadurch gekennzeichnet, dass** die Abdeckfolie (11) transparent ist.

3. Verpackung nach Anspruch 1 oder 2, **dadurch gekennzeichnet, dass** die Kunststoffverbundfolie (11') mindestens Polyäthylen-terephthalat (PET) (25), orientiertes biaxiales Polyamid (OPA)(27), peelbare Polyäthylen-terephthalat (PET)(15) und/oder Polypropylen-(PP)Folien aufweist.

4. Verpackung nach Anspruch 1 oder 2, **dadurch gekennzeichnet, dass** die Kunststoffverbundfolie (11') mindestens Polyäthylen-therephthalat-AlOₓ (31), orientiertes biaxiales Polyamid (OPA)(27), Polypropylen (PP) und peelbares Polyäthylentherephthalat (PET)(15) aufweist.

5. Verpackung nach einem der Ansprüche 1 bis 4, **dadurch gekennzeichnet, dass** die Abdeckfolie (11;11') der Innenseite der Schale zugewandt eine Polymerbeschichtung aufweist auf Basis Polypropylen oder eines Polyesters wie insbesondere teilweise vernetztem PET.

6. Verpackung nach einem der Ansprüche 1 bis 5, **dadurch gekennzeichnet, dass** die Verschweissbarkeit der Polymere derart ist, dass bei Sterilisation bzw. Pasteurisierung der Verpackung absolute Dichte der Schweissnaht sichergestellt ist.

7. Verpackung nach einem der Ansprüche 1 bis 6, **dadurch gekennzeichnet, dass** eine Aluminiumlegierung verwendet wird mindestens enthaltend Eisen und Silizium.

8. Verfahren zur Herstellung einer Lebensmittelverpackung, insbesondere für Fertiggerichte, **dadurch gekennzeichnet, dass** eine Schale aus Aluminium oder einer Aluminiumlegierung verwendet wird, wobei die der Innenseite der Schale zugewandte Oberfläche des Aluminiums entfettet und chromatisiert wird, worauf schliesslich eine Polymerschicht lackiert wird auf Basis eines wärmebeständigen, lebensmitteltauglichen Polyesters, welches auf Basis eines wenigstens teilweise vernetzten Polyäthylentherephtalats aufgebaut ist.

9. Verfahren nach Anspruch 8, **dadurch gekennzeichnet, dass** für die Herstellung der Verpackung die Schale mittels einer Folie verschlossen wird, auf Basis von Aluminium bzw. einer Aluminiumlegierung, wobei die Oberfläche der Folie, welche der Schaleninnenseite zugewandt ist, zunächst entfettet und chromatisiert wird, nachfolgend mittels einem Haftvermittler oder Primer versehen wird, um schliesslich mittels einer Polymerlackierung versehen zu werden auf Basis eines wärmebeständigen, lebensmitteltauglichen Polyesters, wobei die Lackierung beispielsweise mittels Aufpinseln oder Sprühverfahren erfolgen kann.

10. Verfahren nach einem der Ansprüche 8 oder 9, **dadurch gekennzeichnet, dass** das für die Innenlackierung der Schale verwendete Polymer bzw. der Polyester und das für die Lackierung der Innenseite einer Abdeckfolie (11; 11') nach einem der Ansprüche 1 bis 5 verwendete Polymer derart gut miteinander verschweissbar sind, dass auch eine gute Dichtheit bei Sterilisation oder Pasteurisierung der Verpackung sichergestellt ist.

11. Verpackung nach einem der Ansprüche 1-7, **dadurch gekennzeichnet, dass** sie absolut PVC frei ist.

## Claims

1. A packaging particularly for ready cooked meals comprising a bowl (3) consisting to a large extend of aluminum or an aluminum alloy, wherein the interior of the bowl is painted with a thermo resistant, food compatible polymer (5), wherein the bowl (3) is closeable with a protective sheet (11; 11') consisting of a composite plastic foil, which is painted on the inside with a food compatible, thermo resistant sealing wax (15), which can be heat-sealed at least with the polymer coating of the bowl (3) along the bowl rim (7, 17), **characterized in that** the polymer painting of the bowl (3) is built up based on a, at least in parts, linked polyethylene terephthalate (PET).

2. The packaging according to claim 1, **characterized in that** the protective sheet (11) is transparent.

3. The packaging according to claim 1 or 2, **characterized in that** the composite plastic foil (11') comprises at least polyethylene terephthalate (PET) (25), biaxially oriented polyamide (OPA) (27), peelable polyethylene terephthalate (PET) (15) and/or polypropylene-(PP) foils.

4. The packaging according to claim 1 or 2, **characterized in that** the composite plastic foil (11') comprises at least polyethylene terephthalate AlOₓ (31), biaxially oriented polyamide (OPA) (27), polypropylene (PP) and peelable polyethylene terephthalate (PET) (15).

5. The packaging according to any one of claims 1 to 4, **characterized in that** the protective sheet (11; 11'), on the side facing the interior of the bowl, comprises a polymer coating based on polypropylene or a polyester, in particular partially linked PET.

6. The packaging according to any one of claims 1 to 5, **characterized in that** the heat sealability of the polymers is such that during sterilization or pasteurization of the packaging, respectively, absolute tightness of the heat-sealing line is guaranteed.

7. The packaging according to any one of claims 1 to 6, **characterized in that** an aluminum alloy, at least comprising iron and silicon, is used.

8. A method for manufacturing a packaging particularly for ready cooked meals, **characterized in that** a bowl consisting of aluminum or an aluminum alloy is used, wherein the surface of the aluminum, which faces the interior of the bowl, is degreased and chromatized, whereupon a polymer layer, based on a thermo resistant, food compatible polyester, which is built up based on a, at least in parts, linked polyethylene terephthalate, is finally painted.

9. The method according to claim 8, **characterized in that** for manufacturing the packaging the bowl is closed by a foil based on aluminum or an aluminum alloy, respectively, wherein the surface of the foil, which faces the interior of the bowl, is initially degreased and chromatized, afterwards treated with a adhesion promoter or a primer to be finally treated with a polymer lacquer based on a thermo resistant, food compatible polyester, wherein the lacquer can be applied, for instance, by brushing or spraying technique.

10. The method according to claim 8 or 9, **characterized in that** the polymer or the polyester, respectively, used for the interior painting of the bowl and the polymer used for painting the interior of a protective sheet (11; 11') according to one of claims 1 to 5, can be heat-sealed well together in such that a good sealing during sterilization or pasteurization of the packaging is also guaranteed.

11. The packaging according to any one of claims 1 to 7, **characterized in that** the packaging is absolutely free of PVC.

## Revendications

1. Emballage alimentaire en particulier pour plats préparés présentant un bol (3) composé en grande partie d'aluminium ou d'un alliage d'aluminium, le bol étant enduit sur sa face intérieure d'un polymère apte au contact alimentaire et résistant à la chaleur (5), le bol pouvant être fermé par un opercule (11 ; 11') composé d'une feuille de plastique composite, lequel opercule étant enduit sur le côté intérieur d'un vernis de scellement (15) apte au contact alimentaire et résistant à la chaleur qui peut être soudé au revêtement polymère du bol (3) au moins le long du bord du bol (7, 17), **caractérisé en ce que** l'enduit polymère du bol (3) est composé à base d'un polyéthylène-téréphtalate (PET) au moins partiellement réticulé.

2. Emballage selon la revendication 1, **caractérisé en ce que** l'opercule (11) est transparent.

3. Emballage selon la revendication 1 ou 2, **caractérisé en ce que** la feuille de plastique composite (11') présente au moins du polyéthylènetéréphtalate (PET) (25), du polyamide biaxialement orienté (OPA) (27), du polyéthylène-téréphtalate pelable (PET) (15) et/ou des feuilles de polypropylène (PP).

4. Emballage selon la revendication 1 ou 2, **caractérisé en ce que** la feuille de plastique composite (11') présente au moins du polyéthylène-téréphtalate-AIOₓ (31), du polyamide biaxialement orienté (OPA) (27), du polypropylène (PP) et du polyéthylène-téréphtalate pelable (PET) (15).

5. Emballage selon l'une des revendications 1 à 4, **caractérisé en ce que** l'opercule (11 ; 11') orienté vers la face intérieure du bol présente un revêtement polymère à base de polypropylène ou d'un polyester, comme en particulier du PET partiellement réticulé.

6. Emballage selon l'une des revendications 1 à 5, **caractérisé en ce que** la soudabilité des polymères est telle qu'il est garanti une étanchéité absolue du cordon de soudure lors de la stérilisation ou de la pasteurisation de l'emballage.

7. Emballage selon l'une des revendications 1 à 6, **caractérisé en ce qu'**il est utilisé un alliage d'aluminium comprenant au moins du fer et du silicium.

8. Procédé pour fabriquer un emballage alimentaire, en particulier pour plats préparés, **caractérisé en ce qu'**on utilise un bol en aluminium ou en alliage d'aluminium, la surface de l'aluminium orientée vers la face intérieure du bol étant dégraissée et chromatée et étant ensuite enduite d'une couche de polymère à base d'un polyester apte au contact alimentaire et résistant à la chaleur, lequel polyester étant composé à base d'un polyéthylène-téréphtalate au moins partiellement réticulé.

9. Procédé selon la revendication 8, **caractérisé en ce que** pour la fabrication de l'emballage, le bol est fermé à l'aide d'une feuille à base d'aluminium ou d'un alliage d'aluminium, la surface de la feuille orientée vers l'intérieur du bol étant d'abord dégraissé et chromatée, étant ensuite munie d'un agent d'adhérence ou d'un apprêt, pour pouvoir enfin être munie d'un enduit polymère à base d'un polyester apte au contact alimentaire et résistant à la chaleur, l'enduit pouvant par exemple être réalisé au pinceau ou par pulvérisation.

10. Procédé selon l'une des revendications 8 ou 9, **caractérisé en ce que** le polymère ou le polyester utilisé pour le revêtement intérieur du bol et le polymère utilisé pour le revêtement de la face intérieure d'un opercule (11 ; 11') selon l'une des revendications 1 à 5 peuvent être facilement soudés l'un à l'autre de telle sorte qu'il est garanti une bonne étanchéité lors d'une stérilisation ou d'une pasteurisation de l'emballage.

11. Emballage selon l'une des revendications 1 à 7, **caractérisé en ce qu'**il est totalement exempt de PVC.
